(19) Europäisches Patentamt European Patent Office Office européen des brevets

(11) **EP 1 119 097 B1**

(12) **FASCICULE DE BREVET EUROPEEN**

(45) Date de publication et mention
de la délivrance du brevet:
**07.09.2016 Bulletin 2016/36**

(51) Int Cl.:
***H02P 6/08*** (2006.01)

(21) Numéro de dépôt: **01400113.5**

(22) Date de dépôt: **16.01.2001**

(54) **Moteur triphasé à vitesse variable et commutation électronique**

Dreiphasen-Motor mit verstellbarer Geschwindigkeit und elektronischer Kommutation

Variable speed three-phase motor with electronic commutation

(84) Etats contractants désignés:
**DE ES FR GB IT**

(30) Priorité: **18.01.2000 FR 0000589**

(43) Date de publication de la demande:
**25.07.2001 Bulletin 2001/30**

(73) Titulaire: **Valeo Systèmes de Contrôle Moteur
95520 Osny (FR)**

(72) Inventeur: **Laurent, Jean-Marie
78360 Montesson (FR)**

(74) Mandataire: **Cardon, Nicolas
Valeo Systèmes de Contrôle Moteur
Immeuble Le Delta
14, avenue des Béguines
95800 Cergy St Christophe (FR)**

(56) Documents cités:
**US-A- 5 457 374    US-A- 5 463 300**

**Description**

La présente invention concerne les moteurs à commutation électronique, dits aussi moteurs sans balais, destinés à des applications qui requièrent à la fois un rendement acceptable et un coût faible. Elle trouve une application importante, bien que non exclusive, dans le domaine automobile, pour entraîner des pompes d'alimentation de servo-moteurs ou vérins en un débit très variable de liquide hydraulique sous pression.

Les moteurs à commutation électronique comprennent un ensemble stator-rotor dont un des éléments, généralement le stator, a des bobines constituant généralement un enroulement triphasé et un module électronique de commande ayant des entrées reliées à des capteurs de position du rotor (capteurs de Hall en général) et à un signal de consigne de vitesse et comportant un circuit de puissance pour alimenter les phases à partir d'une source de courant continu sous le contrôle d'un calculateur.

En général, pour des raisons de rendement, le calculateur est prévu pour que les phases soient alimentées dans un mode dit 120°. Dans ce cas le module alimente deux phases d'un moteur triphasé tour à tour en impulsions périodiques de tension avec un rapport cyclique d'ouverture (dit RCO ou PWM) variable pour assurer la régulation de vitesse, sans recouvrement temporel des périodes d'alimentation des différentes phases. Mais ce mode d'alimentation a l'inconvénient de présenter une caractéristique vitesse/couple insuffisante à vitesse élevée qui s'adapte mal aux conditions de fonctionnement dans certaines conditions (par exemple alimentation d'un vérin de servo-direction lors d'un braquage brutal des roues à faible vitesse ou à l'arrêt).

On connaît par ailleurs un mode de régulation dit 180°, se traduisant par l'alimentation en impulsions des trois phases à la fois. Mais ce mode de commande présente un rendement dégradé à faible charge du moteur, notamment du fait de la présence d'une forte composante réactive qui augmente les pertes par effet Joule.

Le document US5457374 décrit un moteur à commutation électronique comprenant un ensemble stator-rotor dont un des éléments a des bobines constituant un enroulement triphasé, et un module électronique de commande ayant des entrées reliées à des capteurs de la position du rotor et à un signal de consigne de vitesse et un circuit de puissance pour alimenter les phases à partir d'une source de courant continu sous le contrôle d'un calculateur.

La présente invention vise notamment à fournir un moteur répondant mieux que ceux antérieurement connus aux exigences de la pratique, notamment en ce qu'il permet d'obtenir à la fois un bon rendement à faible charge et un couple important à vitesse élevée. Elle propose dans ce but un moteur à commutation électronique comprenant un ensemble stator-rotor dont un des éléments a des bobines constituant un enroulement triphasé et un module électronique de commande ayant des entrées reliées à des capteurs de la position du rotor et à un signal de consigne de vitesse et un circuit de puissance pour alimenter les phases à partir d'une source de courant continu sous le contrôle d'un calculateur. Le calculateur est caractérisé en ce qu'il est prévu pour provoquer l'alimentation des phases avec un rapport cyclique d'ouverture variable pour assurer la régulation de vitesse suivant un premier mode, dit 120°, sans recouvrement temporel des périodes d'alimentation des différentes phases en impulsions de courant et suivant un second mode, dit 180°, avec un recouvrement de 33 % entre alimentations de deux bobines, et pour provoquer le passage du premier mode au second lorsque le rapport cyclique d'ouverture atteint une valeur prédéterminée comprise entre 70 % et 100 % et le passage du second mode au premier lorsque le rapport cyclique d'ouverture descend au-dessous d'une autre valeur prédéterminée. Cette autre valeur est choisie pour éviter un phénomène de « pompage », en créant une hystérésis.

Pour que le passage du premier mode au second s'effectue sans à-coups, le rapport cyclique d'ouverture est modifié lors de ce passage en utilisant une table mémorisée. La régulation est généralement de type PI (proportionnel - intégral). Le passage d'un mode à l'autre est alors accompagné avantageusement d'une modification du terme intégral suivant une table de correspondance avec la vitesse.

Les caractéristiques ci-dessus ainsi que d'autres apparaîtront mieux à la lecture de la description qui suit d'un mode particulier de réalisation, donné à titre d'exemple non limitatif :

- la figure 1 est un schéma électrique d'un moteur suivant l'invention ;
- les figures 2 et 3 sont des chronogrammes faisant apparaître les périodes d'alimentation des différentes phases en modes 120° et 180°, respectivement ;
- les figures 4 et 5 montrent l'allure des caractéristiques couple/tension en mode 120° et en mode 180° ainsi que la transition de l'un à l'autre ;
- la figure 6 montre l'effet du passage d'un mode à l'autre.

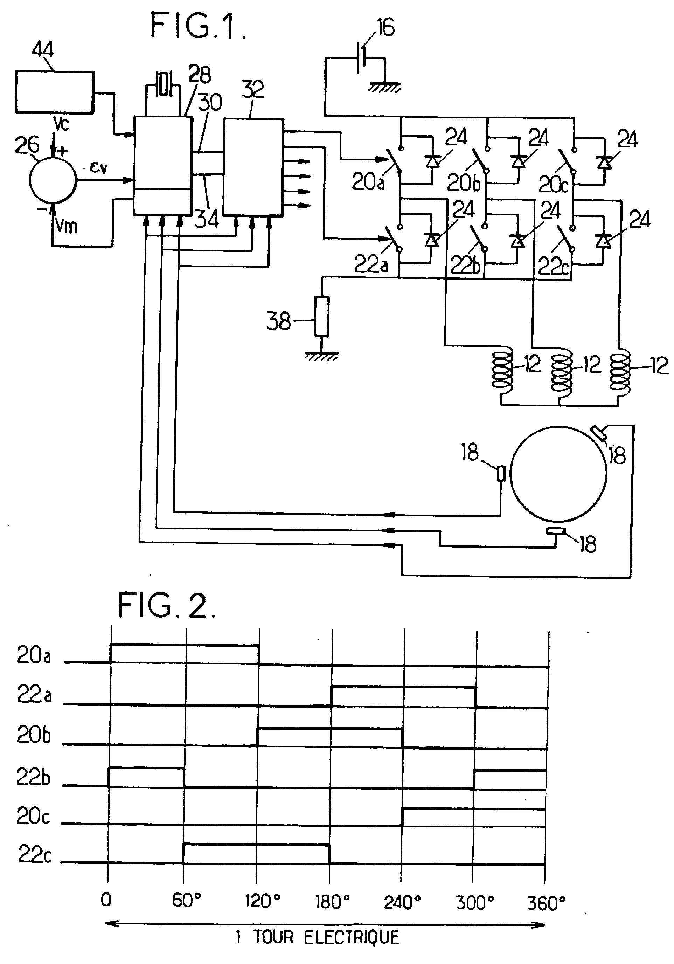

Le moteur dont le schéma électrique est montré en fig. 1 comporte un ensemble de constitution classique ayant un rotor 10 à aimants permanents et un stator portant trois bobines 12 (ou trois jeux de bobines) et des capteurs 18 de position du rotor. Le module de commande permet d'alimenter les bobines à partir d'une source 16 de courant continu. Ce module est avantageusement monté directement sur le stator. Il comporte trois branches d'alimentation de bobines respectives 12. Les extrémités de chaque branche sont reliées à une borne de la source 16 et chaque branche comporte deux interrupteurs en série 20 et 22. Chaque interrupteur est en parallèle avec un élément 24 à conduction unidirectionnelle. Les interrupteurs seront généralement constitués par des transistors MOS et les éléments 24 par des diodes à état solide.

Les bobines représentées sur la figure 1 sont montées en étoile. Elles sont alimentées chacune à partir du point milieu de l'une des branches. Un montage en triangle est également possible.

Le montage représenté est à régulation de vitesse et de type numérique. Il comporte un soustracteur 26 qui reçoit, sur une entrée, un signal numérique $V_c$ indiquant la valeur de consigne de la vitesse et, sur l'autre entrée, un signal numérique $V_m$ qui reçoit un signal numérique représentatif de la vitesse du rotor. Ce signal $V_m$ peut être fourni par un capteur particulier. Plus souvent, il sera élaboré par un calculateur 28 qui reçoit le signal de sortie des capteurs de position 18.

Le calculateur 28 est prévu pour fournir, sur sa sortie 30, un signal numérique représentatif du rapport cyclique d'ouverture ou RCO $\tau/t$ des impulsions de tension périodiques fournies aux bobines pendant des périodes successives chacune de durée T. Ce signal est élaboré à partir du signal d'erreur $\varepsilon_v$ fourni par le soustracteur 26. Le circuit 32 de commande des interrupteurs de puissance 20 et 22 élabore les signaux de fermeture des interrupteurs à partir de la valeur du RCO, des signaux fournis par les capteurs 18 qui donnent la position du rotor et d'un signal de synchronisation et de commande de fréquence 34. Pour des moteurs électriques dont la vitesse maximale ne dépasse pas quelques milliers de tours par minute, une fréquence d'impulsion de 5 à 20 kHz donne généralement de bons résultats.

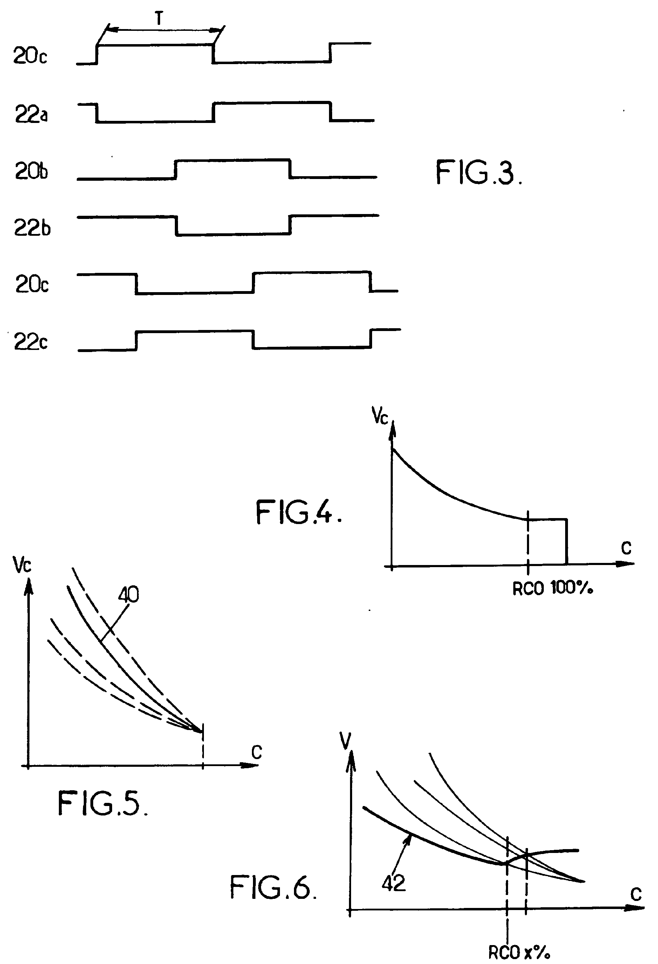

La figure 2 montre la succession des périodes T de fermeture des interrupteurs 20 et 22 en mode 120°. Chacune des lignes porte une référence correspondant à celle affectée à l'interrupteur correspondant sur la figure 1. Le mode de la figure 2, dit 120°, a l'avantage de donner un rendement élevé. Mais la caractéristique vitesse/couple du moteur fonctionnant dans ce mode est du genre montré en figure 4. Un couple élevé ne peut être obtenu que pour une vitesse faible. Une fois qu'un rapport cyclique de 100 % est atteint, toute augmentation du couple ne peut être obtenue que par augmentation de l'intensité du courant, qui doit elle-même être limitée à une valeur compatible avec la tenue des roulements, correspondant à la limite droite de la courbe sur la figure 4. L'intensité du courant peut être mesurée à partir de la tension aux bornes d'une résistance 38 sur le retour vers la masse.

Le mode 180° de fonctionnement du moteur se fait avec des fermetures des interrupteurs présentant l'échelonnement représenté sur la figure 3. La courbe 40 sur la figure 5 donne un exemple de caractéristique dans ce mode. Comme on le verra plus loin, l'asservissement utilisé est de type proportionnel-intégral. Il existe alors une famille de caractéristiques, représentées en tirets sur la figure 5, correspondant à des valeurs différentes du rapport cyclique d'ouverture (RCO).

Conformément à un mode particulier de réalisation de l'invention, le calculateur 28 est prévu pour provoquer initialement le fonctionnement en mode 120° et faire passer le circuit de commande 32 du mode 120° au mode 180°. Ainsi il est possible d'obtenir une caractéristique du genre montré en 42 sur la figure 6.

Pour obtenir une transition douce d'un mode à l'autre, il convient d'amener le circuit de commande à passer de la caractéristique de départ en mode 120° à une caractéristique du mode 180° qui est proche pour la même valeur du couple. Cela implique de changer le RCO par exemple à partir d'une table de correspondance mémorisée. Dans le cas d'une régulation proportionnelle-intégrale, ce résultat peut être obtenu ou complété par un changement du terme intégral, suivant une table également stockée dans une mémoire 44, en fonction de la vitesse.

Si on désigne par en l'erreur de vitesse pour l'échantillon numérique n, on peut notamment utiliser un terme intégral int (n) de la forme :

$$\text{int (n)} = \text{int (n-1)} + \varepsilon n.\, k_i$$

ou $k_i$ est le coefficient du terme intégral.

Le rapport cyclique d'ouverture RCO(n) est alors donné par :

$$\text{RCO(n)} = Kp.\, \varepsilon n + \text{int(n)}$$

Lors de la commutation à 180°, on substitue, au terme int(n+1) que fourniraient les formules ci-dessus, un autre terme int(n+1) qui est une fonction de la vitesse et du RCO, stockée dans la mémoire 44.

Pour faciliter la transition, le passage en mode 180° est avantageusement effectué sur un front montant ou descendant des périodes T, simplement en retardant ce passage.

Le calculateur 28 est prévu pour faire revenir le circuit de commande en mode 120° pour une valeur du nouveau rapport cyclique d'ouverture choisie telle qu'il n'y ait pas de risque d'un phénomène de pompage, c'est-à-dire d'alternances rapides entre les deux modes ; le RCO est encore modifié lors de la commutation en utilisant la table en mémoire 44.

L'ensemble des fonctions de calcul et de commande peuvent être réalisées par un microcontrôleur de type très simple, facilement monté dans le boîtier du moteur.

## Revendications

1. Moteur à commutation électronique comprenant un ensemble stator-rotor dont un des éléments a des bobines constituant un enroulement triphasé et un module électronique de commande ayant des entrées reliées à des capteurs (18) de la position du rotor et à un signal de consigne de vitesse (Vc) et un circuit de puissance pour alimenter les phases à partir d'une source de courant continu (32) sous le contrôle d'un calculateur (28), le calculateur étant **caractérisé en ce qu'**il est prévu :

- pour provoquer l'alimentation des phases avec un rapport cyclique d'ouverture variable pour assurer la régulation de vitesse suivant un premier mode, dit 120°, sans recouvrement temporel des périodes d'alimentation des différentes phases en impulsions de courant et suivant un second mode, dit 180°, avec un recouvrement de 33 % entre alimentations de deux bobines, et
- pour provoquer le passage du premier mode au second lorsque le rapport cyclique d'ouverture atteint une valeur prédéterminée comprise entre 70 % et 100 % et le passage du second mode au premier lorsque le rapport cyclique d'ouverture descend au-dessous d'une autre valeur prédéterminée.

2. Moteur suivant la revendication 1, **caractérisé en ce que** le calculateur est prévu pour modifier le rapport cyclique d'ouverture des impulsions de tension lors du passage du premier mode au second et du second en premier en utilisant une table mémorisée (44).

3. Moteur suivant la revendication 1 ou 2, **caractérisé en ce que** le calculateur est prévu pour effectuer une régulation de type proportionnel-intégral et **en ce que** le terme intégral est modifié lors des passages.

4. Moteur suivant la revendication 3, **caractérisé en ce que** le calculateur met en oeuvre une régulation avec un terme intégral int(n) pour un échantillon n de la forme :

$$int(n) = int(n-1) + \varepsilon n. \, ki$$

où ki est le coefficient du terme intégral, et le rapport cyclique d'ouverture RCO(n) étant donné par : RCO(n) = Kp. $\varepsilon n$ + int(n) où $\varepsilon n$ est une erreur de vitesse pour l'échantillon n et où Kp est un coefficient caractérisant un gain proportionnel appliqué sur l'erreur $\varepsilon n$ représentatif du calculateur (28) ; et est prévu pour, lors de la commutation à 180°, substituer au terme int(n+1) un autre terme int(n+1) qui est une fonction de la vitesse et du RCO stockée dans la mémoire (44).

5. Moteur selon l'une quelconque des revendications précédentes, **caractérisé en ce que** le calculateur est prévu pour provoquer le passage d'un mode à l'autre sur un front montant ou descendant des périodes (T).

6. Moteur selon l'une quelconque des revendications précédentes, **caractérisé en ce que** le calculateur (28) est prévu pour provoquer initialement le fonctionnement en mode 120° et faire passer un circuit de commande (32) du mode 120° au mode 180° lorsque le rapport cyclique d'ouverture atteint la valeur prédéterminée.

**Patentansprüche**

1. Elektronisch kommutierter Motor, der eine Stator-Rotor-Anordnung, wovon eines der Elemente Spulen besitzt, die eine dreiphasige Wicklung bilden, ein elektronisches Steuermodul, das Eingänge, die mit Sensoren (18) für die Position des Rotors und mit einem Drehzahlsollsignal (Vc) verbunden sind, und eine Leistungsschaltung, um die Phasen von einer Gleichstromquelle (32) unter der Steuerung eines Rechners (28) zu versorgen, umfasst, wobei der Rechner **dadurch gekennzeichnet ist, dass** er dazu vorgesehen ist:

- die Versorgung der Phasen mit einem variablen zyklischen Öffnungsverhältnis zu bewirken, um die Regulierung der Drehzahl gemäß einer ersten Betriebsart, die 120°-Betriebsart genannt wird, ohne zeitliche Abdeckung von Versorgungsperioden unterschiedlicher Impuls- und Stromphasen und gemäß einer zweiten Betriebsart, die 180°-Betriebsart genannt wird, mit einer Abdeckung von 33 % zwischen Versorgungen von zwei Spulen zu gewährleisten, und
- den Übergang von der ersten Betriebsart in die zweite Betriebsart zu bewirken, wenn das zyklische Öffnungsverhältnis einen vorgegebenen Wert erreicht, der im Bereich von 70 % bis 100 % liegt, und den Übergang von der zweiten Betriebsart in die erste Betriebsart zu bewirken, wenn das Öffnungstaktverhältnis unter einen anderen vorgegebenen Wert fällt.

2. Motor nach Anspruch 1, **dadurch gekennzeichnet, dass** der Rechner dazu vorgesehen ist, das zyklische Öffnungsverhältnis der Spannungsimpulse bei einem Übergang von der ersten Betriebsart in die zweite Betriebsart und von der zweiten Betriebsart in die erste Betriebsart unter Verwendung einer gespeicherten Tabelle (44) zu modifizieren.

3. Motor nach Anspruch 1 oder 2, **dadurch gekennzeichnet, dass** der Rechner vorgesehen ist, um eine Regulierung des Proportional-Integral-Typs zu bewirken, und dass der Integralterm bei den Übergängen modifiziert wird.

**4.** Motor nach Anspruch 3, **dadurch gekennzeichnet, dass** der Rechner eine Regulierung mit einem Integralterm int(n) für einen Abtastwert n der folgenden Form ausführt:

$$int(n) = int(n - 1) + \varepsilon n \cdot ki$$

wobei ki der Koeffizient des Integralterms ist und das zyklische Öffnungsverhältnis RCO(n) gegeben ist durch: RCO(n) = Kp · $\varepsilon$n + int(n), wobei $\varepsilon$n ein Drehzahlfehler für den Abtastwert n ist und wobei Kp ein Koeffizient ist, der eine auf den Fehler $\varepsilon$n ausgeübte Proportionalverstärkung, die für den Rechner (28) repräsentativ ist, bezeichnet; und dazu vorgesehen ist, bei der Kommutation mit 180° den Term int (n + 1) durch einen anderen Term int(n + 1), der eine Funktion der Drehzahl und des in dem Speicher (44) gespeicherten RCO ist, zu ersetzen.

**5.** Motor nach einem der vorhergehenden Ansprüche, **dadurch gekennzeichnet, dass** der Rechner dazu vorgesehen ist, den Übergang von einer Betriebsart in die andere Betriebsart bei einer Anstiegsflanke oder einer Abstiegsflanke der Periode (T) zu bewirken.

**6.** Motor nach einem der vorhergehenden Ansprüche, **dadurch gekennzeichnet, dass** der Rechner (28) dazu vorgesehen ist, anfangs die Funktion in der 120°-Betriebsart zu bewirken und eine Steuerschaltung (32) von der 120°-Betriebsart in die 180°-Betriebsart übergehen zu lassen, wenn das zyklische Öffnungsverhältnis den vorgegebenen Wert erreicht.

**Claims**

**1.** Electronic commutation motor comprising a stator-rotor assembly of which one of the elements has coils constituting a three-phase winding and an electronic control module having inputs connected to rotor position sensors (18) and to a speed setpoint signal (Vc) and a power circuit for supplying the phases from a DC source (32) under the control of a computer (28), the computer being **characterized in that** it is intended:

- to cause the phases to be supplied with a variable cyclic opening ratio to ensure speed regulation in a first mode, termed 120° mode, without time overlap between the periods in which the various phases are supplied with current pulses, and in a second mode, termed 180° mode, with an overlap of 33% between energizations of two coils, and

- to cause the changeover from the first mode to the second mode when the cyclic opening ratio reaches a predetermined value of between 70% and 100% and the changeover from the second mode to the first when the cyclic opening ratio drops below another predetermined value.

**2.** Motor according to Claim 1, **characterized in that** the computer is intended to modify the cyclic opening ratio of the voltage pulses during the changeover from the first mode to the second and from the second to the first by using a stored table (44).

**3.** Motor according to Claim 1 or 2, **characterized in that** the computer is intended to perform a regulation of the proportional-integral type, and **in that** the integral term is modified during the changeovers.

**4.** Motor according to Claim 3, **characterized in that** the computer implements a regulation with an integral term int(n) for a sample n of the form:

$$int(n) = int(n-1) + \varepsilon n. ki$$

where ki is the coefficient of the integral term, and the cyclic opening ratio COR(n) being given by: COR(n) = Kp. $\varepsilon$n + int (n) where $\varepsilon$n is a speed error for the sample n and where Kp is a coefficient characterizing a proportional gain applied to the error $\varepsilon$n representative of the computer (28); and is intended in order, during switching to 180°, to substitute for the term int(n+1) another term int(n+1) which is a function of the speed and of the COR stored in the memory (44).

**5.** Motor according to any one of the preceding claims, **characterized in that** the computer is intended to cause the changeover from one mode to the other on a rising or falling front of the periods (T).

**6.** Motor according to any one of the preceding claims, **characterized in that** the computer (28) is intended to initially cause the operation in 120° mode and to switch a control circuit (32) from the 120° mode to the 180° mode when the cyclic opening ratio reaches the predetermined value.

# FIG.1.

# FIG.2.

1 TOUR ELECTRIQUE

FIG.3.

FIG.4.

FIG.5.

FIG.6.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5457374 A